# EUROPÄISCHE PATENTSCHRIFT

(11) **EP 1 073 173 B1**
(45) Veröffentlichungstag und Bekanntmachung des Hinweises auf die Patenterteilung: **02.01.2004**
(21) Anmeldenummer: 00111533.6
(22) Anmeldetag: 30.05.2000
(51) Int. Cl.: H02G 3/12

(54) **Kombination aus Elektroinstallationsgerät und Abdeckblende**
Combination electrical installation apparatus and a front cover
Combinaison d'un appareil d'installation élèctrique et d'une plaque de couverture

(30) Priorität: 30.07.1999 DE 29913343 U
(43) Veröffentlichungstag der Anmeldung: 31.01.2001
(73) Patentinhaber: Tehalit GmbH & Co. KG, 67716 Heltersberg (DE)
(72) Erfinder: Kauf, Peter, Dipl.-Ing., 66482 Zweibrücken (DE); Schneckmann, Horst, 67705 Trippstadt (DE); Schmitt, Erwin, 67659 Kaiserslautern (DE)
(74) Vertreter: Patentanwälte Möll und Bitterich

(56) Entgegenhaltungen:
- EP-A- 0 913 902
- EP-A- 0 986 157
- DE-U- 29 902 280

## Beschreibung

Die Erfindung betrifft Kombinationen aus Elektroinstallationsgerät und Abdeckblende gemäß dem Oberbegriff des Anspruchs 1, bestimmt für den frontrastenden Einbau in Geräteeinbaukanäle.

Geräteeinbaukanäle sind Leitungsführungskanäle, die für den Einbau von Elektroinstallationsgeräten - Schalter, Steckdosen, Sicherungen usw. - bestimmt sind. Sie werden seit vielen Jahren in den unterschiedlichsten Ausführungen in großen Mengen hergestellt und verarbeitet. Sie bestehen im wesentlichen aus einem trogförmigen Unterteil mit einem überwiegend U- bis C-förmigen Querschnitt und einem Deckel. Die Befestigung des Deckels erfolgt mit Hilfe von speziellen Deckelhalteprofilen, die die offene Frontseite des Kanalunterteils begrenzen.

Die Befestigung der Elektroinstallationsgeräte erfolgt grundsätzlich auf zwei unterschiedliche Arten. Die eine Befestigungsart ist die Befestigung an Halteleisten, die an der Innenseite des Kanalbodens vorgesehen sind. Die andere Befestigungsart ist der frontrastende Einbau, d. h. die Befestigung der Installationsgeräte an den Deckelhalteprofilen. Die vorliegende Erfindung betrifft diese zweite Befestigungsart

Für den frontrastenden Einbau werden entweder spezielle Einbaudosen oder spezielle Elektroinstallationsgeräte verwendet. Beide sind mit Haltevorrichtungen ausgerüstet, die mit den Deckelhalteprofilen des Geräteeinbaukanals korrespondieren. Man vergleiche beispielsweise DE-U 299 02 280, DE-U 94 06 360, EP-A 0 913 902, FR-A 27 56 431 oder DE-U 93 14 551.

An den Stellen, an denen Installationsgeräte eingesetzt sind, werden spezielle Abdeckblenden verwendet, um die elektrische Sicherheit sowie die Ästhetik zu gewährleisten. Diese Abdeckblenden werden entweder zusätzlich auf die Deckelhalteprofile des Geräteeinbaukanals oder auf das bereits montierte Installationsgerät aufgerastet. Man vergleiche beispielsweise DE-U 93 14 551 oder FR-A 27 56 431.

Um die oftmals unschönen Stoßkanten der üblichen Kanaldeckel kaschieren zu können, sind die Abdeckblenden mit Seitenelementen ausgerüstet, die die Kanaldeckel übergreifen. Man vergleiche FR-A 27 56 431 oder DE-U 93 14 551.

Eine alternative Möglichkeit besteht darin, Elektroinstallationsgeräte zu verwenden, deren Front bereits als Abdeckblende gestaltet ist. Man vergleiche beispielsweise FR-A 27 56 431 oder DE-U 299 02 280.

Oftmals besteht der Wunsch, mehrere Elektroinstallationsgeräte lückenlos anzureihen. Dabei stören aber die kaschierenden Seitenelemente. Aus diesem Grunde sieht die DE-U 299 02 280 vom Elektroinstallationsgerät abnehmbare Seitenelemente vor.

Nachteilig an den handelsüblichen Geräten und Abdeckblenden für den frontrastenden Einbau ist die Tatsache, dass die Geräte mit zusätzlichen Haltevorrichtungen ausgerüstet sein müssen, die mit den Deckelhalteprofilen korrespondieren. Diese Haltevorrichtungen stehen seitlich über; diese Geräte können anderweitig nicht eingesetzt werden. Auch müssen diese Haltevorrichtungen auf den jeweiligen Geräteeinbaukanal bzw. dessen Deckelhalteprofile genau abgestimmt sein. Dies erfordert somit einen hohen Fertigungs-, Lager-, Transport- und Bestellaufwand. Das ist unbefriedigend.

Der vorliegenden Erfindung liegt daher die Aufgabe zugrunde, eine Kombination aus Elektroinstallationsgerät und Abdeckblende anzugeben, die diese Nachteile weitestgehend behebt.

Diese Aufgabe wird durch eine Kombination mit den Merkmalen des Anspruchs 1 gelöst.

Dank der vorliegenden Erfindung werden nur die Abdeckblenden mit Haltevorrichtungen ausgerüstet, die mit den Deckelhalteprofilen des jeweiligen Geräteeinbaukanals korrespondieren müssen. Diese Blenden sind preiswert und benötigen wenig Platz. Die Einbaugeräte dagegen, gleichgültig ob es sich dabei um leere Einbaudosen oder um komplette Elektroinstallationsgeräte handelt, können immer mit denselben Haltevorrichtungen versehen sein, die mit entsprechenden Haltevorrichtungen an der Abdeckblende korrespondieren und die sichere Befestigung des Einbaugerätes an der Abdeckblende ermöglichen. Einbaugerät und Abdeckblende bilden somit eine Einheit, die bei Bedarf auch wieder gelöst werden kann.

Gemäß einer vorteilhaften Ausgestaltung der Erfindung handelt es sich bei den zweiten Haltevorrichtungen an der Rückseite der Abdeckblende um Rasthaken, die mit entsprechenden Rastnuten am Einbaugerät korrespondieren.

Um das Anreihen mehrerer Einbaugeräte zu ermöglichen, besitzt die Abdeckblende vorteilhafterweise abnehmbare Endstücke.

Um ein lückenloses Anreihen von Einbaugeräten zu ermöglichen, ist gemäß einer vorteilhaften Ausgestaltung der Erfindung die Länge der Abdeckblende bei abgenommenen Endstücken gleich der Länge des Einbaugerätes.

Zur leichten Montage und Demontage der abnehmbaren Endstücke sind diese vorteilhafterweise mit Stecklaschen ausgerüstet, die mit Haltenuten an der Abdeckblende korrespondieren.

Anhand der Zeichnung soll die Erfindung in Form eines Ausführungsbeispiels näher erläutert werden. Es zeigen jeweils in perspektivischer Darstellung
Fig. 1 eine Kombination aus Einbaugerät und Abdeckblende,
Fig. 2 die Rückseite der Abdeckblende von Fig. 1,
Fig. 3 die Vorderansicht einer Abdeckblende mit abgenommenen Endstücken,
Fig. 4 die Vorderansicht eines Endstücks und
Fig. 5 die Rückansicht eines Endstücks.

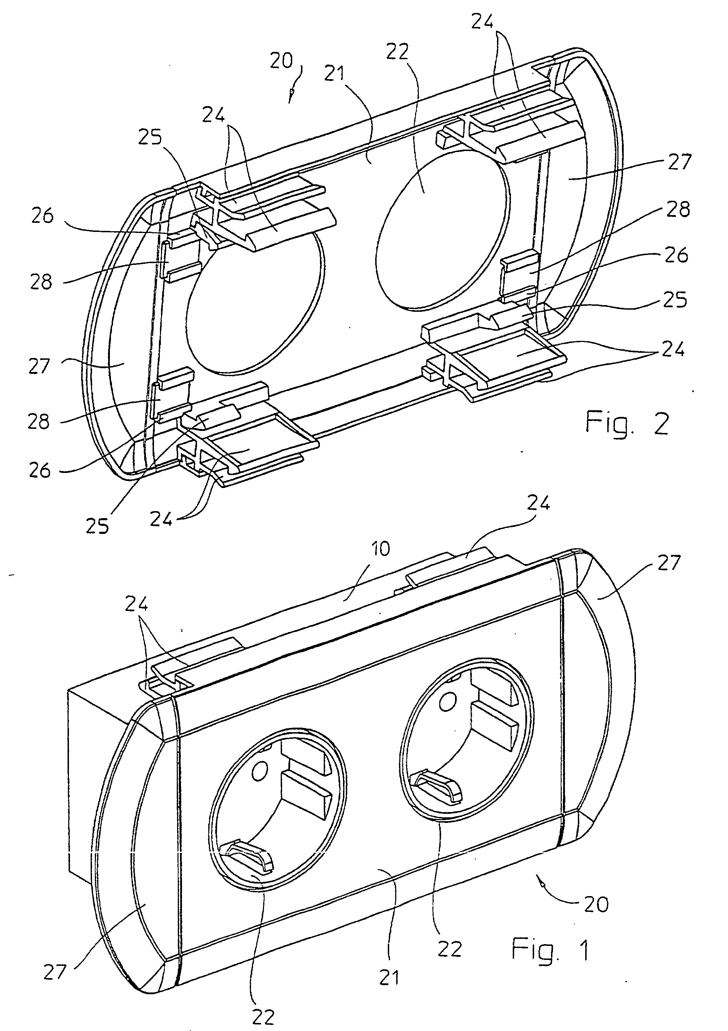

Fig. 1 zeigt die perspektivische Ansicht einer Kombination aus einem Einbaugerät 10, . hier einer Schutzkontakt-Doppelsteckdose, und einer Abdeckblende 20. Die Abdeckblende 20 besteht aus einem Zentralteil 21 mit abnehmbaren Endstücken 27. Das Zentralteil 21 besitzt zwei Öffnungen 22, die den Zugang zu den Steckkontakten der Doppelsteckdose 10 ermöglichen.

Fig. 2 zeigt die Rückseite der Abdeckblende 20 von Fig. 1 ohne Einbaugerät 10. Man erkennt das Zentralteil 21 mit den beiden Öffnungen 22, an dem erste Haltevorrichtungen 24 vorgesehen sind, die mit den Deckelhalteprofilen eines Geräteeinbaukanals (nicht dargestellt) korrespondieren. Die Konstruktion der ersten Haltevorrichtungen 24 variiert somit entsprechend dem Typ des Geräteeinbaukanals, für den die Abdeckblende 20 bestimmt ist

An der Rückseite des Zentralteils 21 erkennt man ferner zweite Haltevorrichtungen 25 in Form von federnden Rasthaken, die mit entsprechenden Rastnuten an dem Einbaugerät 10 korrespondieren. Dank dieser Rasthaken 25 lässt sich die Abdeckblende 20 auf das Einbaugerät 10 aufrasten, wobei eine sichere und dauerhafte, bei Bedarf lösbare Verbindung entsteht.

Schließlich erkennt man an der Rückseite des Zentralteils 21 Haltenuten 26. Diese korrespondieren mit Stecklaschen 28, die an den Endstücken 27 befestigt sind. Dadurch kann das eine und/oder das andere Endstück 27 abgenommen werden, wenn mehrere Einbaugeräte 10 angereiht werden sollen.

Ist wie in Fig. 1 dargestellt die Länge des Zentralteils 21 der Abdeckblende 20 gleich der Länge des Einbaugerätes 10, ist eine lückenlose Anreihung möglich.

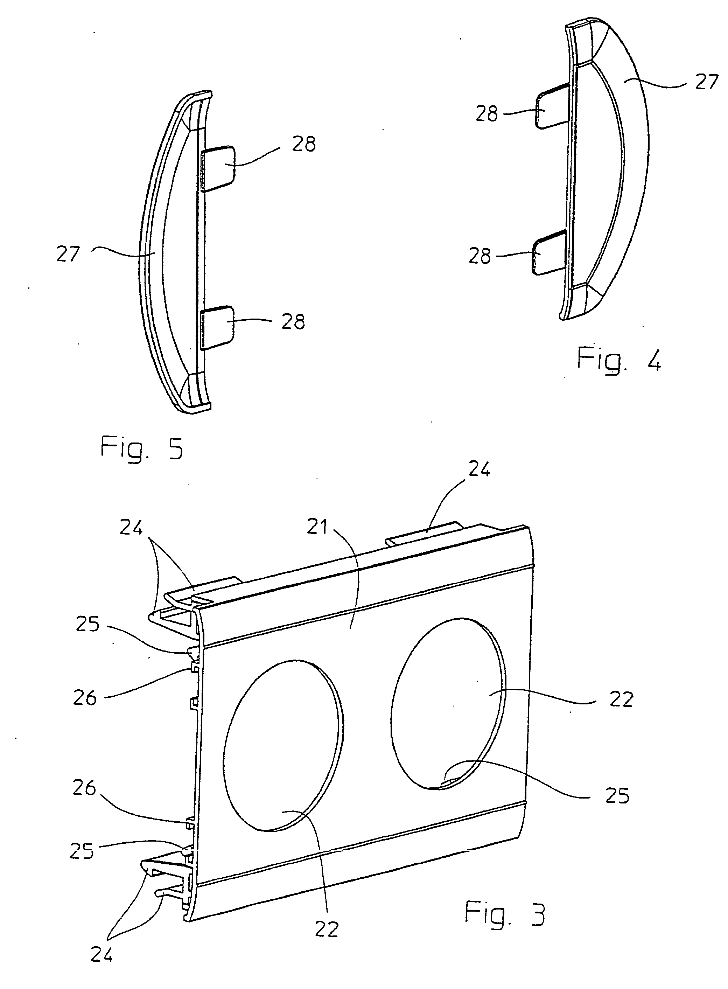

Fig. 3 zeigt die Vorderseite des Zentralteils 21 mit der Abdeckblende 20 bei abgenommenen Endstücken 27.

Fig. 4 zeigt die Vorderseite eines abgenommenen Endstücks 27 mit Stecklaschen 28.

Fig. 5 zeigt die Rückseite eines abgenommenen Endstücks 27.

## Patentansprüche

1. Kombination aus Einbaugerät (10) und Abdeckblende (20), bestimmt für den frontrastenden Einbau in Geräteeinbaukanäle, die an ihrer offenen Frontseite Deckelhalteprofile aufweisen,
**gekennzeichnet durch** die Merkmale:
- die Abdeckblende (20) besitzt an ihrer Rückseite
- erste Haltevorrichtungen (24), die mit den Deckelhalteprofilen korrespondieren,
- und zweite Haltevorrichtungen (25),
- das Einbaugerät (10) besitzt dritte Haltevorrichtungen, die mit den zweiten Haltevorrichtungen (25) korrespondieren und die sichere Befestigung des Einbaugerätes (10) an der Abdeckblende (20) ermöglichen.

2. Kombination nach Anspruch 1, **gekennzeichnet durch** das Merkmal:
- die zweiten Haltevorrichtungen (25) sind federnde Rasthaken.

3. Kombination nach Anspruch 1 oder 2, **gekennzeichnet durch** das Merkmal:
- die dritten Haltevorrichtungen sind Rastnuten.

4. Kombination nach Anspruch 1, 2 oder 3, **gekennzeichnet durch** das Merkmal:
- die Abdeckblende (20) besitzt abnehmbare Endstücke (27).

5. Kombination nach einem der Ansprüche 1 bis 4, **gekennzeichnet durch** die Merkmale:
- die Endstücke (27) besitzen Stecklaschen (28),
- die Abdeckblende (20) besitzt damit korrespondierende Haltenuten (26).

6. Kombination nach Anspruch 4 oder 5, **gekennzeichnet durch** das Merkmal:
- die Länge der Abdeckblende (21) bei abgenommenen Endstücken (27) ist gleich der Länge des Einbaugerätes (10).

## Claims

1. Combination of a built-in apparatus (10) and a covering screen (20), intended for front-locking installation in apparatus installation trunking which comprises cover retaining profiles at its open front side,
**characterised by** the features:
- at its rear side the covering screen (20) has
- first retaining devices (24) which correspond to the cover retaining profiles,
- and second retaining devices (25),
- the built-in apparatus (10) has third retaining devices which correspond to the second retaining devices (25) and enable the built-in apparatus (10) to be securely fastened to the covering screen (20).

2. Combination according to Claim 1, **characterised by** the feature:
- the second retaining devices (25) are resilient locking hooks.

3. Combination according to Claim 1 or 2, **characterised by** the feature:
- the third retaining devices (25) are locking grooves.

4. Combination according to Claim 1, 2 or 3, **characterised by** the feature:
- the covering screen (20) has removable end pieces (27).

5. Combination according to any one of Claims 1 to 4,
**characterised by** the feature:
- the end pieces (27) have push-in straps (28),
- the covering screen (20) has retaining grooves (26) which correspond to the straps.

6. Combination according to Claim 4 or 5, **characterised by** the feature:
- the length of the covering screen (21) when the end pieces (27) are removed is equal to the length of the built-in apparatus (10).

## Revendications

1. Combinaison d'un appareil d'installation électrique (10) et d'un cache (20), destinée à être encastrée dans des goulottes d'installation électrique qui présentent sur leur face avant ouverte des profilés de retenue de couvercle,
**caractérisée par le fait que**
- le cache (20) possède sur sa face arrière
- des premiers dispositifs de retenue (24) qui correspondent aux profilés de retenue de couvercle
- et des deuxièmes dispositifs de retenue (25),
- l'appareil d'installation électrique (10) possède des troisièmes dispositifs de retenue qui correspondent aux deuxièmes dispositifs de retenue (25) et permettent la fixation sûre de l'appareil d'installation électrique (10) au cache (20).

2. Combinaison selon la revendication 1, **caractérisée par le fait que**
- les deuxièmes dispositifs de retenue (25) sont des crochets d'arrêt à ressort.

3. Combinaison selon la revendication 1 ou 2, **caractérisée par le fait que**
- les troisièmes dispositifs de retenue sont des rainures d'arrêt.

4. Combinaison selon la revendication 1, 2 ou 3, **caractérisée par le fait que**
- le cache (20) possède des extrémités amovibles (27).

5. Combinaison selon l'une des revendications 1 à 4, **caractérisée par le fait que**
- les extrémités (27) possèdent des languettes enfichables (28),
- le cache (20) possède des rainures de retenue (26) qui leur correspondent.

6. Combinaison selon la revendication 4 ou 5, **caractérisée par le fait que**
- la longueur du cache (21), les extrémités (27) étant enlevées, est égale à la longueur de l'appareil d'installation électrique (10).
